Europäisches Patentamt

European Patent Office

Office européen des brevets

(19)

(11) Veröffentlichungsnummer: **0 066 292**
**A2**

(12) # EUROPÄISCHE PATENTANMELDUNG

(21) Anmeldenummer: **82104804.8**

(22) Anmeldetag: **02.06.82**

(51) Int. Cl.³: **G 03 B 35/08**

(30) Priorität: **03.06.81 DE 3122092**

(43) Veröffentlichungstag der Anmeldung:
**08.12.82** Patentblatt **82/49**

(84) Benannte Vertragsstaaten:
**AT CH DE FR GB IT LI NL**

(71) Anmelder: **PHOTO UNIVERSAL Deuscher KG GmbH & Co.**
**Max-Planck-Strasse 28**
**D-7012 Fellbach(DE)**

(72) Erfinder: **Opitz, Wilhelm**
**Am Grasweg 16**
**D-2106 Seevetal(DE)**

(72) Erfinder: **Meinunger, Helmut**
**Ehrenfelsstrasse 3**
**D-8000 München(DE)**

(74) Vertreter: **Schaefer, Gerhard, Dr.**
**Seitnerstrasse 13**
**D-8023 Pullach(DE)**

(54) Vorrichtung zur Herstellung stereoskopischer Bilder.

(57) Bei einer Vorrichtung zur Herstellung stereoskopischer Bilder sind zwei Kameras gleicher Art in einer Halterung befestigt, welche Einrichtungen zur gemeinsamen Betätigung von Betätigungsorganen der Kameras aufweisen. Hierbei kann je eine Einrichtung für die gleichzeitige Auslösung, für die Einstellung der Entfernung und oder der Blende und/oder der Belichtungszeit beider Kameras sowie zum gemeinsamen Filmtransport vorgesehen sein. Außerdem kann eine Einrichtung zur Betätigung der die Objektive abdeckenden Gehäuseteile vorgesehen sein. Die Einrichtungen können als um eine Achse schwenkbare Platten oder als verschiebbare Platten oder Stangen ausgebildet sein.

EP 0 066 292 A2

Croydon Printing Company Ltd.

## Vorrichtung zur Herstellung
stereoskopischer Bilder

Es ist bekannt, stereoskopische Bilder mit Kameras herzustellen, die zwei gleiche Objektive aufweisen. Derartige Kameras sind teuer und für andere Zwecke nicht verwendbar. Sie haben sich daher bisher nicht durchgesetzt.

Es ist ferner bekannt, mit einer herkömmlichen Kamera Stereobilder zu erzeugen, indem eine solche Kamera mittels einer entsprechenden Vorrichtung nacheinander in zwei senkrecht zur optischen Achse versetzte Stellungen gebracht wird und die Bilder nacheinander aufgenommen werden. Eine solche Vorrichtung hat zwar den Vorteil, daß eine herkömmliche Kamera verwendet werden kann; wegen der zeitlich versetzten Aufnahme sind jedoch stereoskopische Aufnahmen von bewegten Objekten nicht möglich. Auch ist die Handhabung derartiger Vorrichtungen umständlich und schwierig.

Der Erfindung liegt die Aufgabe zugrunde, diese Nachteile zu vermeiden und eine einfach zu bedienende Vorrichtung zu schaffen, mit der unter Verwendung herkömmlicher Kameras stereoskopische Bilder hergestellt werden können.

Erfindungsgemäß wird dies dadurch erreicht, daß zwei Kameras gleicher Art in einer Halterung befestigt sind, welche Einrichtungen zur gemeinsamen Betätigung von Betätigungsorganen der Kameras aufweisen.

Der besondere Vorteil dieser Vorrichtung liegt darin, daß herkömmliche Kameras gleichen Typs verwendet werden können. Zwei derartige Kameras sind häufig bei Fotografen bereits vorhanden und dienen bisher dazu, einerseits Schwarzweiß-, andererseits Farbaufnahmen zu machen. Sofern keine Stereoaufnahmen gemacht werden sollen, können diese Kameras hierzu jederzeit wieder verwendet werden.

Gemäß einer vorteilhaften Weiterbildung der Erfindung ist eine Einrichtung zur gleichzeitigen Auslösung beider Kameras vorgesehen. Weiterhin können erfindungsgemäß Einrichtungen für die Einstellung der Entfernung und/oder der Blende und/oder der Belichtungszeit vorgesehen sein. Außerdem kann eine Einrichtung zum gemeinsamen Filmtransport vorgesehen sein. Ferner kann eine Einrichtung zur Betätigung der die Objektive abdeckenden Gehäuseteile vorgesehen sein.

Die konkreten Merkmale derartiger Einrichtungen hängen vom Typ der verwendeten Kamera ab. Grundsätzlich sind hierbei in der Halterung um eine Achse schwenkbare Platten oder verschiebbare Platten oder Stangen vorgesehen, die mittels Ansätzen oder Mitnehmern gleichzeitig die gleichartigen Betätigungsorgane beider Kameras in gleicher Weise betätigen. Sie können demgemäß gleichzeitig auf die Auslöser beider Kameras drückbar sein. Sie können auch die Hebel für die Entfernungseinstellung, die Blende und/oder die Verschlußzeit betätigen.

Für den Fall, daß keine Ansätze oder Mitnehmer an dem entsprechenden Einstellorgan vorhanden sind, beispielsweise, wenn die Blenden- oder Entfernungseinstellung lediglich durch Drehen von Ringen erfolgt, ist es gemäß einem weiteren Merkmal der Erfindung vorgesehen, die Kante einer senkrecht zur Achse der Drehrichtung verschiebbaren Schiebestange in Eingriff mit dem Einstellorgan zu bringen und diese an der in Eingriff stehenden Kante mit einer Profilierung oder einem elastischen Belag zu versehen.

Gemäß einer weiteren Ausbildung der Erfindung ist es ferner möglich, auf derartige Einstellorgane einen vorzugsweise elastischen Ring aufzusetzen, der einen Ansatz oder Mitnehmer aufweist, mit dem eine verschiebbare Platte oder Schiebestange in Eingriff bringbar ist.

Weitere Einzelheiten und Vorteile der Erfindung können den in den Zeichnungen dargestellten Ausführungsbeispielen entnommen werden.

Es zeigen:

Figur 1    die Ansicht einer Ausführungsform der Erfindung mit zwei gleichen Kameras eines bestimmten Typs;

Figur 2    eine Draufsicht auf die in Figur 1 dargestellte Anordnung;

Figur 3    einen Schnitt längs der Linie III-III in Figur 1;

Figur 4    die Ansicht einer weiteren Ausführungsform der Erfindung mit zwei anderen Kameras;

Figur 5    einen Schnitt längs der Linie V-V in Figur 4;

Figur 6    die Ansicht einer Abwandlung der in Figur 4 dargestellten Ausführungsform der Erfindung;

Figur 7    die Ansicht einer weiteren Ausführungsform der Erfindung mit zwei weiteren Kameras;

Figur 8  eine Draufsicht auf die in Figur 6 dargestellte Anordnung.

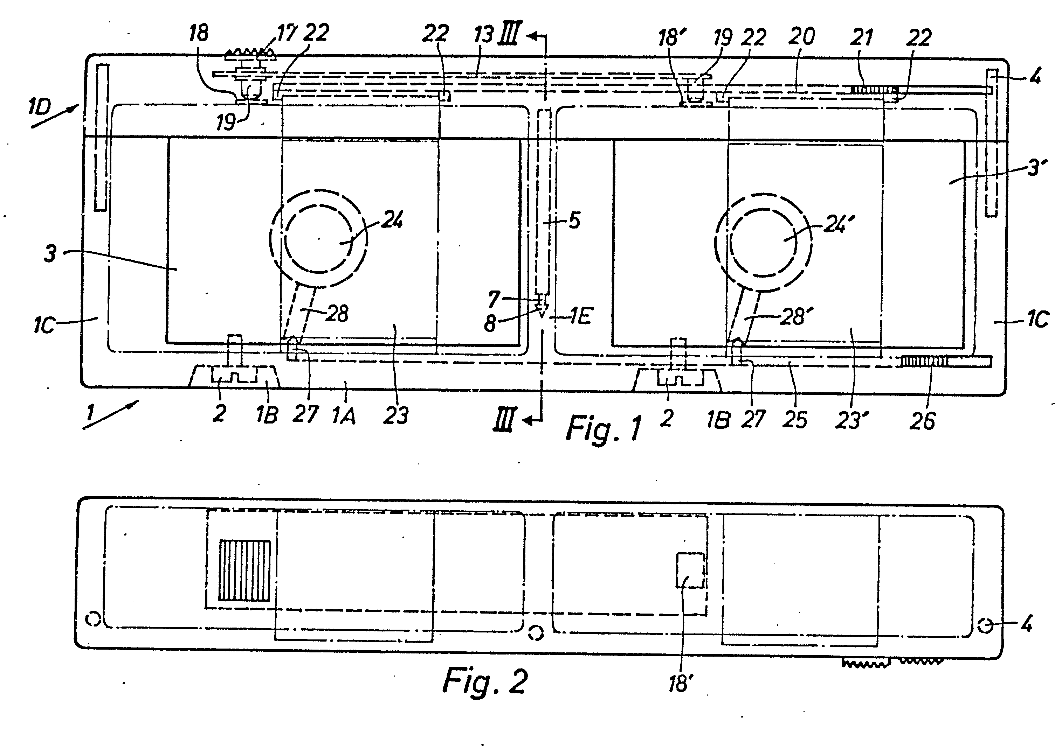

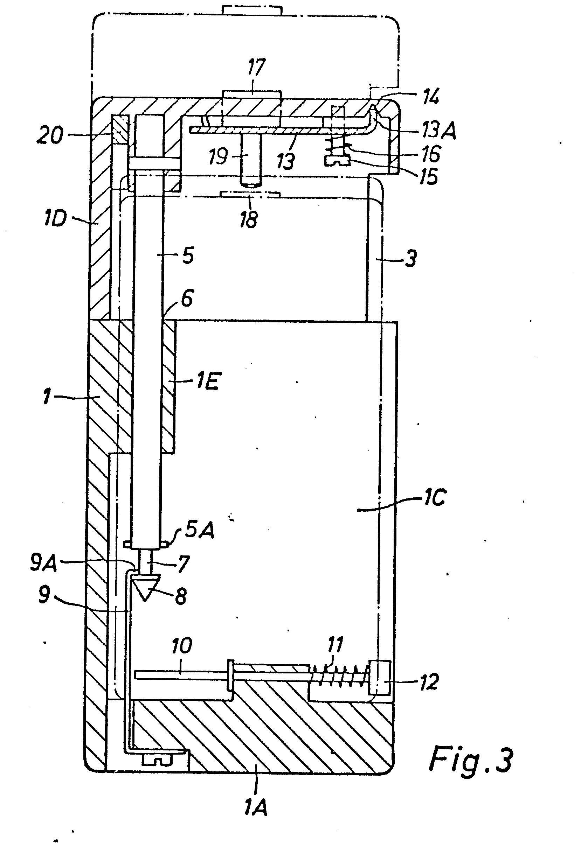

Bei der in den Figuren 1 bis 3 dargestellten Ausführungsform besteht die erfindunsgemäße Vorrichtung aus einem kastenförmigen Gehäuse 1, auf dessen Grundplatte 1A mittels Schrauben 2, die in Ausnehmungen 1B in der Grundplatte 1A versenkt sind, zwei Kameras 3, 3' (hier des Typs OLYMPUS) befestigt sind. Auf den Seitenwänden 1C des Gehäuses 1 ist eine Abdeckhaube 1D befestigt, die zum Öffnen des Gehäuses nach oben verschiebbar ist. Sie wird dabei durch zwei im Gehäuse 1 oder in der Abdeckhaube 1D befestigte Stifte 4 geführt, die in Bohrungen im jeweils anderen Teil verschiebbar sind. Im mittleren Teil der Abdeckhaube 1D ist ein Arretierungsbolzen 5 befestigt, der in der Bohrung 6 im Gehäuse 1 verschiebbar ist und der an seinem Ende nach einem verjüngten Teil 7 mit einem kegelförmigen Teil 8 versehen ist. Im geschlossenen Zustand greift ein abgewinkelter Ansatz 9A einer im Gehäuse 1 befestigten Blattfeder hinter die Basis des kegelförmigen Teils 8 und hält den Bolzen 5 in seiner Lage fest. Rechtwinklig zum Bolzen 5 und auf die Blattfeder 9 ausgerichtet ist in der Grundplatte 1A des Gehäuses 1 ein Stift 10 federnd gelagert, der von der Rückseite des Gehäuses 1 aus mittels eines Betätigungsknopfes 12 gegen die Kraft einer Feder 11 gegen die Blattfeder 9 preßbar ist und die abgekröpfte Stelle 9A außer Eingriff mit der Basis des Kegels 8 bringt. Hierdurch läßt sich die Abdeckhaube 1D des Gehäuses  hochziehen, bis der am unteren Ende des Bolzens 5 angeordnete Stift 5A mit dem Ansatz des Gehäuses 1E in Eingriff kommt. Nach Hochziehen der Abdeckhaube 1D in die in Figur 3 strichpunktiert dargestellte Stellung lassen sich die Kameras 3 und 3' aus dem Gehäuse 1 entnehmen.

In der Abdeckhaube 1D ist eine Betätigungsplatte 13 mittels eines abgebogenen Teils 13A in einer Kerbe 14 des Gehäuses 1 schwenkbar gelagert und durch Schrauben 15, um die Druckfedern 16 angeordnet sind, elastisch in ihrer Ruhelage gehalten. In der Betätigungsplatte 13 ist ein durch eine Öffnung der Abdeckhaube 1D hindurchreichender Betätigungsknopf 17 eingesetzt, der auf den Auslöser 18 der Kamera 3 drückbar ist. An der dem Auslöser 18' der Kamera 3' entsprechenden Stelle der Platte 13 ist eine verstellbare, auch justierbare Nase 19 angeordnet. Bei Betätigung des Auslöseknopfes 17 wird die Platte 13 um die Spitze des Ansatzes 13A gegen die Kraft der Feder 16 geschwenkt und das untere Ende des Betätigungsknopfes 17 drückt gleichzeitig mit der Nase 19 auf die Auslöser 18 bzw. 18'.

In der Abdeckhaube 1D ist, wie insbesondere den Figuren 1 und 3 zu entnehmen ist, ferner ein Schieber 20 angeordnet, der eine Betätigungstaste 21 aufweist und der mit nach unten gerichteten Ansätzen 22 versehen ist, die mit einem bei dem verwendeten Kameratyp vorgesehenen verschiebbaren Verschlußschieber 23' bzw. 23 in Eingriff steht, durch den das Objekt 24 bzw. 24' der Kameras verschließbar ist. Durch Betätigung dieses Schiebers 20 können demgemäß beide Kameras gleichzeitig geöffnet oder geschlossen werden.

Das Gehäuse 1 weist weiterhin einen Schieber 25 auf, der mit einer Betätigungstaste 26 versehen ist und der mit Ansätzen 27 versehen ist, die mit einem Hebel 28 bzw. 28' an den Kameras 3 bzw. 3' in Eingriff stehen, durch die die Entfernung eingestellt wird. Eine Verschiebung des Schiebers 25 mit Hilfe der Betätigungstaste 26 erlaubt es somit, die Entfernungseinstellung beider Kameras gleichzeitig und in gleicher Weise vorzunehmen.

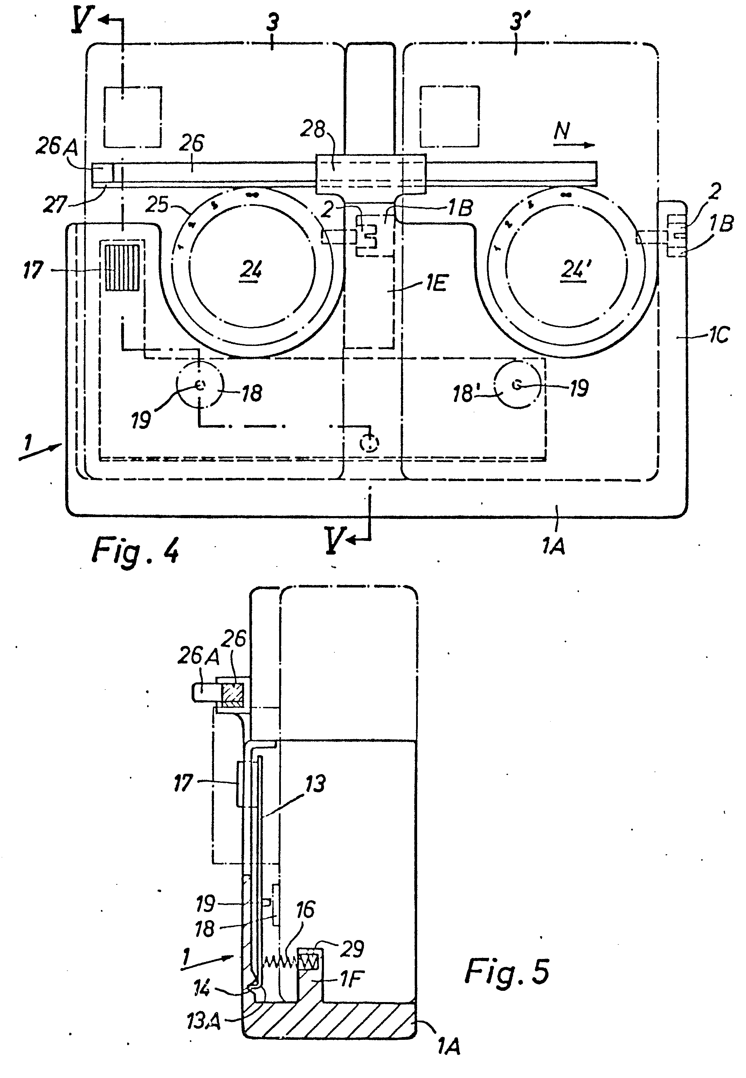

Die Figuren 4 und 5 zeigen eine weitere Ausführungsform der erfindungsgemäßen Vorrichtung für zwei andere Kameras 3 und 3' (im vorliegenden Fall des Typs BALDA). Hier sind die Kameras auf einem oben offenen Rahmen befestigt. Hier sind die Kameras 3 und 3' auf einem Gehäuse 1 befestigt, das nur aus einem oben offenen Rahmen mit einer Grundplatte 1A und Seitenwänden 1C sowie einem Mittelsteg 1E besteht und also keine Abdeckhaube aufweist. Da die Kameras 3 und 3' hier im Hochformat angeordnet sind, sind die Befestigungsschrauben 2 in Ausnehmungen 1B des einen Seitenholms 1C und des Mittelstegs 1E angeordnet. Da bei den hier dargestellten Kameras die Filme durch Aufklappen ihrer Rückwand eingesetzt oder entnommen werden können, können diese Kameras auch beim Filmwechsel im Gehäuse verbleiben. Die Schrauben 2 müssen daher nur einmal bei der Erstmontage angezogen werden. Ein Herausnehmen der Kameras ist nicht erforderlich.

Die Auslöser 18 und 18' beider Kameras 3 und 3' werden gemeinsam durch eine Platte 13 betätigt, die ebenfalls einen abgebogenen Teil 13A aufweist, der in einer Kerbe 14 des Gehäuses 1 schwenkbar gelagert ist. Die Platte 13 ist gegen die Kraft einer Feder 16 schwenkbar, die in einer Bohrung 29 eines Ansatzes 1F der Grundplatte 1A des Gehäuses 1 gehaltert ist. Die Platte 13 weist zwei Nasen 19 auf, die auf die Auslöseknöpfe 18 und 18' drückbar sind. Mindestens eine der Nasen 19 kann dabei in ihrer Länge einstellbar und damit justierbar sein. Die Platte 13 selbst wird durch einen Betätigungsknopf 17 betätigt.

Zur Betätigung des um das Objekt 24 angeordneten Entfernungseinstellung 25 ist bei dieser Ausführungsform erfindungsgemäß zusätzlich eine Schiebestange 26 vorgesehen, die mit einem Griff 26A versehen ist und die an ihrer Unterseite einen Belag 27 aus elastischem Material aufweist. Diese Schiebestange 26 ist in einer an der Zwischenwand 1E befestigten Halterung 28 verschiebbar gelagert, die der Schiebestange 26 außerdem einen leichten Anpreßdruck auf den Entfernungseinstellring 25 verleiht. Durch Verschieben der Schiebestange 26 (in der Zeichnung nach rechts entsprechend dem Pfeil N) werden die Einstellringe 25 beider Kameras 3 und 3' im Uhrzeigersinn gedreht und entsprechend der auf dem Ring angebrachten Markierung erfolgt eine Naheinstellung.

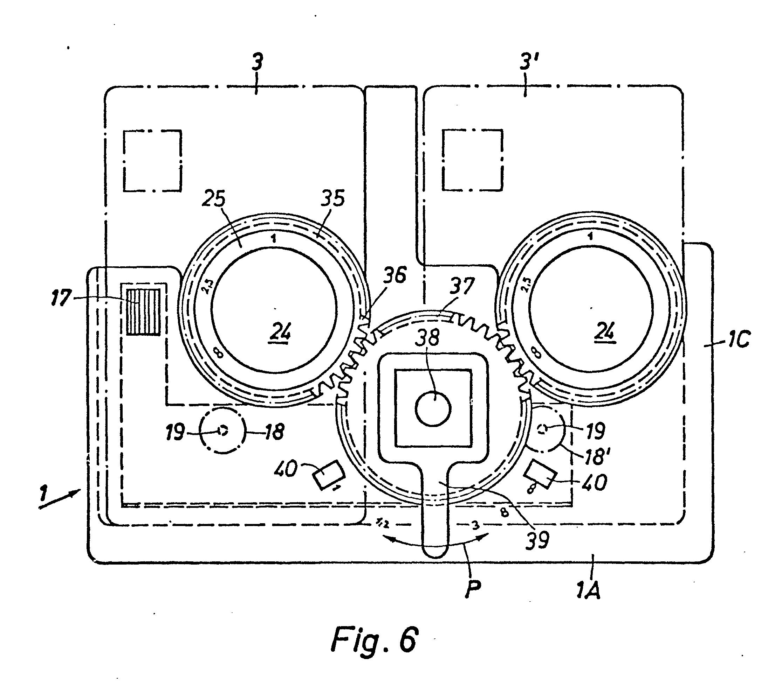

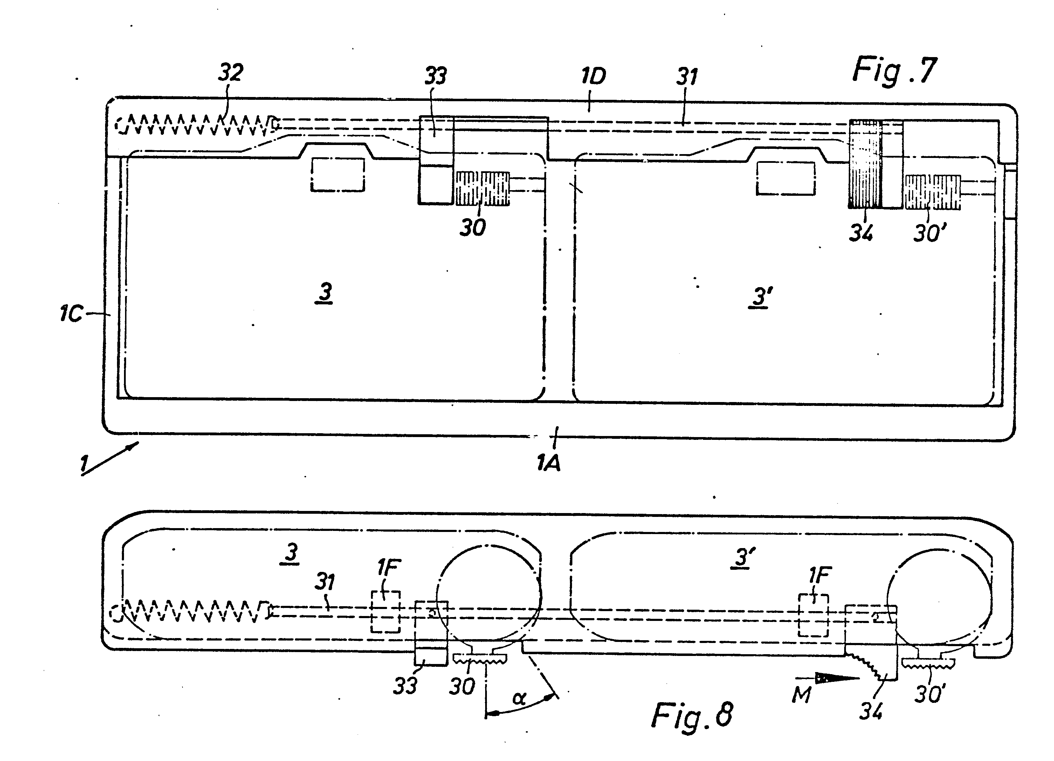

Die in Figur 6 dargestellte Ausführungsform zeigt eine Abwandlung der in den Figuren 4 und 5 dargestellten Vorrichtung. Bei ihr ist zur Betätigung des um das Objektiv 24 angeordneten Entfernungseinstellrings 25 auf diesen ein vorzugsweise aus Kunststoff bestehender Ring 35 aufgeschoben oder aufgepreßt, der an seiner Außenseite mit einem Zahnkranz 36 versehen ist. Mit diesem Zahnkranz 36 steht ein Zahnrad 37 in Eingriff, das mit dem Bolzen 38 drehbar am Gehäuse 1 befestigt ist. Fest, vorzugsweise formschlüssig, mit dem Zahnrad 37 ist ein Hebel 39 verbunden. Durch die Schwenkung dieses Hebels 39 in Richtung des Pfeils P wird die Entfernungseinstellung beider Objektive 24 gleichsinnig geändert. Die Bewegung des Hebels 39 wird durch Anschläge 40 begrenzt.

Die Figuren 7 und 8 zeigen eine weitere Ausführungsform der erfindungsgemäßen Vorrichtung für zwei andere Kameras 3 und 3' (im vorliegenden Fall des Typs MINOX). Bei dieser Ausführungsform ist dargestellt, wie die Filmtransporthebel 30 und 30' der beiden Kameras durch eine gemeinsame Transportvorrichtung weitertransportiert werden. Die gemeinsame Transportvorrichtung besteht aus einer Zugstange 31, die in zwei Ansätzen 1F der Abdeckhaube 1D des Gehäuses 1 verschiebbar gelagert und

Form. 5729 7.78

durch eine Rückholfeder 32 in ihrer Ruhelage gehaltert ist. Die Zugstange 31 ist mit einem Mitnehmer 33 und einem Betätigungsgriff 34 versehen, die bei Bewegung in Richtung des Pfeils M die Filmtransporthebel 30 und 30' mitnehmen und hierdurch den Film weiterbefördern. Wenn der Bewegungswinkel $\alpha$ bei einer einmaligen Betätigung des Betätigungshebels 34 in Richtung des Pfeils M nicht ausreicht, um einen vollständigen Weitertransport des Films zu bewirken, muß dieser bis zum Einrasten mehrfach betätigt werden.

Die erfindungsgemäßen Prinzipien lassen sich auch bei anderen als den dargestellten Fotoapparaten in entsprechender Weise anwenden.

Sofern sich die Fotoapparate in ihrer handelsüblichen Form nicht dazu eignen, alle Einstellvorgänge durch eine schwenkbare Platte oder einen Schieber gemeinsam betätigen zu lassen, ist es gemäß einer besonders vorteilhaften Weiterbildung der Erfindung möglich, auf die Betätigungsorgane einfache und abnehmbare Zusatzglieder aufzusetzen. So kann im Falle eines nur durch Drehbewegung verstellbaren Entfernungs- oder Blenden-Einstellrings auf diesen jeweils ein elastischer Kunststoffring aufgesetzt werden, der einen Ansatz aufweist, mit welchem der Ansatz eines Hebels oder einer verschiebbaren Platte in Eingriff steht.

Patentansprüche

1. Vorrichtung zur Herstellung stereoskopischer Bilder, dadurch gekennzeichnet, daß zwei Kameras (3, 3') gleicher Art in einer Halterung (1) befestigt sind, welche Einrichtungen zur gemeinsamen Betätigung von Betätigungsorganen der Kameras aufweisen.

2. Vorrichtung nach Anspruch 1, dadurch gekennzeichnet, daß eine Einrichtung (13, 19) für die gleichzeitige Auslösung der Kameras (3, 3') vorgesehen ist.

3. Vorrichtung nach Anspruch 1 oder 2, dadurch gekennzeichnet, daß je eine Einrichtung für die Einstellung der Entfernung (25, 27) und/oder der Blende und/oder der Belichtungszeit vorgesehen ist.

4. Vorrichtung nach den Ansprüchen 1 bis 3, dadurch gekennzeichnet, daß eine Einrichtung zum gemeinsamen Filmtransport vorgesehen ist.

Form. 5729 7.78

5. Vorrichtung nach einem der Ansprüche 1 bis 4, dadurch gekennzeichnet, daß eine Einrichtung (20, 22) zur Betätigung der die Objektive (24, 24') abdeckenden Gehäuseteile (23, 23') vorgesehen ist.

6. Vorrichtung nach einem der vorhergehenden Ansprüche, dadurch gekennzeichnet, daß die Einrichtungen als um eine Achse (13A) schwenkbare Platten (13) ausgebildet sind.

7. Vorrichtung nach einem der Ansprüche 1 bis 4, dadurch gekennzeichnet, daß die Einrichtungen als verschiebbare Platten oder Stangen (20, 25, 26, 31) ausgebildet sind.

8. Vorrichtung nach Anspruch 7, dadurch gekennzeichnet, daß die verschiebbare Stange (26) mit einer Kante in Eingriff mit den Entfernungseinstellringen (25) der Kameras (3, 3') steht und daß diese Kante mit einer Profilierung und/oder einem elastischen Belag (27) versehen ist.

9. Vorrichtung nach Anspruch 7, dadurch gekennzeichnet, daß die Platten oder Stangen (20, 25, 26) mit Mitnehmern (33) versehen sind.

10. Vorrichtung nach einem der vorhergehenden Ansprüche, dadurch gekennzeichnet, daß auf die durch Drehung einstellbaren Einstellorgane der Kameras vorzugsweise elastische Ringe mit Ansätzen aufsetzbar sind, in die entsprechend ausgebildete Ansätze der Einrichtungen in Eingriff bringbar sind.

Form. 5729 7.78

11. Vorrichtung nach Anspruch 10, dadurch gekennzeichnet, daß die elastischen Ringe (35) außen mit einem Zahnkranz (36) versehen sind, mit denen die Zähne eines drehbar an der Halterung (1) befestigten Zahnrades (37) in Eingriff stehen, das mittels eines Hebels (38) verschwenkbar ist.

Fig. 1

Fig. 2

0066292

Fig.3

Fig. 4

Fig. 5

*Fig. 6*

*Fig .7*

*Fig. 8*